(19) Europäisches Patentamt
European Patent Office
Office européen des brevets

(11) **EP 4 700 374 A2**

(12) **EUROPEAN PATENT APPLICATION**

(43) Date of publication:
25.02.2026 Bulletin 2026/09

(51) International Patent Classification (IPC):
*G01N 21/88* [(2006.01)]     *G01N 21/94* [(2006.01)]

(21) Application number: 25197274.1

(22) Date of filing: 21.08.2025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 21.08.2024 US 202463685423 P

(71) Applicant: **MacDonald, Dettwiler and Associates Inc.**
**Brampton, Ontario L6Y 6K7 (CA)**

(72) Inventors:
• **Serban, Doru**
**Brampton, Ontario, L6Y 6K7 (CA)**
• **Nordman, Ryan**
**Brampton, Ontario, L6Y 6K7 (CA)**
• **Bjel, Sky**
**Brampton, Ontario, L6Y 6K7 (CA)**
• **Buratynsky, Michael Peter**
**Brampton, Ontario, L6Y 6K7 (CA)**

(74) Representative: **Grünecker Patent- und Rechtsanwälte**
**PartG mbB**
**Leopoldstraße 4**
**80802 München (DE)**

(54) **OPTICAL LASER SYSTEMS AND METHODS FOR DETERMINING CONTAMINATION**

(57)     A system (100) and method for contamination measurement. The system includes a laser sensor (106) for sensing contaminant (102) on an object to generate an image (104), and a sensor interface and image processing module (108) that receives an image of laser light that is sensed on the object. The sensor interface and image processing module processes the image using image characterization and image processing to provide contaminant determination. Contaminant determination may include estimating a degree of change in contaminant level from an initial condition or measuring exact amounts of contaminant collected.

Figure 1

## Description

### Technical Field

The following relates generally to contaminate determination, and more particularly to optical laser system and methods for determining contamination.

### Introduction

The need to determine the amount of contaminant (such as dust) that might either penetrate or accumulate on the functional components of a variety of equipment types is common, particularly during testing or validation of that equipment. In many of these situations, the space where the measuring equipment may be placed is constrained. Also, the target component may have an angular or translational movement adding to system difficulty. For example, where a deposition surface is stationary, a scanning process may be much simpler because time may not be important, so a laser head can move over the inspecting area and sample images without considering the time factor. However, where there is relative movement between the accumulation surface (e.g., a tray) and the position of the laser sensor, the system will consider timing and corelate the acquired images with the position of the moving deposition surface. In addition, acquisition time becomes important as the sample time must be sufficiently small to avoid registering moving images.

Existing optical systems may be based on digital imaging processing that have expensive, larger footprints and sensitive camera type equipment. It may be desirable to have a device that is robust while still providing accurate image acquisitions and that may also be inexpensive. Besides the significant cost of such equipment, the typical optical camera does not allow for lenses focusing on reduced distances (i.e., "close in" measurements). As a result, such systems are too large for placement in confined cavities. Moreover, such systems are prone to be damaged by the same contaminant materials they are intending to measure, and by vibrations or high accelerations all of which effectively limit the applicable cases.

Accordingly, there is a need for an improved system and method for contaminant measurement that overcomes at least some of the disadvantages of existing systems and methods.

### Summary

Provided is a system for contaminant determination. The system includes a laser sensor for sensing contaminant on an object to generate an image, and a sensor interface and image processing module that receives an image of laser light that is sensed on the object. The sensor interface and image processing module processes the image using image characterization and image processing to provide contaminant determination.

The laser sensor is configured for close proximity measurement of the amount of contaminant in a focal point of the optical sensor.

The system may be used to estimate a degree of change in contaminant level from an initial condition.

The system may be used to measure exact amounts of contaminant collected.

The system may further include an exposure subsystem that performs two exposures for each frame to achieve ambiental and infrared (IR) parasitic rejection.

The system may further include an image stitching module that stitches individual frames into a complete picture to provide a detailed image analysis investigation.

The object may include a rotary joint having a confined space where presence of contaminant is determined.

The system may further include a rotation actuation controller for controlling the rotation of the object, and a laser actuation controller for controlling actuation of the laser sensor.

The system may further include a real time clock that implements a time base for a sequence of repeated frames acquisition.

The contaminant may include any one or more of dust, debris, and lunar regolith.

The laser sensor may determine if the object is moving improperly by monitoring contaminant on a surface of an object through collected images.

Provided is a method for contaminate determination. The method includes receiving an image having scanned frames, wherein the scanned frames have a plurality of image pixels, convoluting operators with the scanned frames, evaluating the size of the identified grain particle within the perimeter of the scan, and combining, at the plurality image pixels, a gradient approximation resulting in a magnitude and a direction of the gradient.

The method may further include performing a spectral histogram.

The method may further include performing an integrator.

The method may further include performing an accumulation.

The method may further include dithering the image.

The method may further include preparing the subsequent edge detection by morphing the dark and light dots in a connected network.

The method may further include a differential operator application that confines the image pixels that could falsely result from transitions of light to black.

The method may further include performing actual edge detection with a Sobel-Friedman operator.

The method may further include normalization of groups of dark and white image pixels to provide boundary identification.

The method may further include a calibration phase that detects functional parameters that are dependent on a system.

Other aspects and features will become apparent, to those ordinarily skilled in the art, upon review of the following description of some exemplary embodiments.

**Brief Description of the Drawings**

The drawings included herewith are for illustrating various examples of articles, methods, and apparatuses of the present specification. In the drawings:

Figure 1 is a block diagram of a system for contaminant measurement, in accordance with an embodiment;

Figures 2A-2D are perspective section, side section, top section, and side section views, respectively, of a system for contaminant measurement, in accordance with an embodiment;

Figure 3 is a flow chart of a method for image processing, in accordance with an embodiment;

Figure 4 is a flow chart of a method for image processing, in accordance with an embodiment; and

Figures 5A, 5B, and 5C are user interfaces of a contaminant measurement system, in accordance with an embodiment.

**Detailed Description**

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, or dedicated signal processing controllers (e.g., dsPIC processor), each comprising at least one processor, a data storage system (including volatile and non-volatile memory and/or storage elements), at least one input device, and at least one output device.

The dsPIC (digital processor peripheral interface controller) is a type of microcontroller that has additional hardware components that allows the processor to process input data on hardware rather than software control. The dsPIC may include a multiplication barrel which is a type of hardware stack that performs the multiplication operation as a sequential addition to the stack. The dsPIC has a controller having a fast clock which may result in reduced time execution which may be advantageous for image processing.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

A description of an embodiment with several components in communication with each other does not imply that all such components are required. On the contrary, a variety of optional components are described to illustrate the wide variety of possible embodiments of the present invention.

The present disclosure provides systems and methods for contaminant determination. Contaminant determination may include, for example, estimating a degree of change in contaminant level from an initial condition (e.g., identifying the presence of contaminant, and its degree of change over time) or measuring exact amounts of contaminant collected.

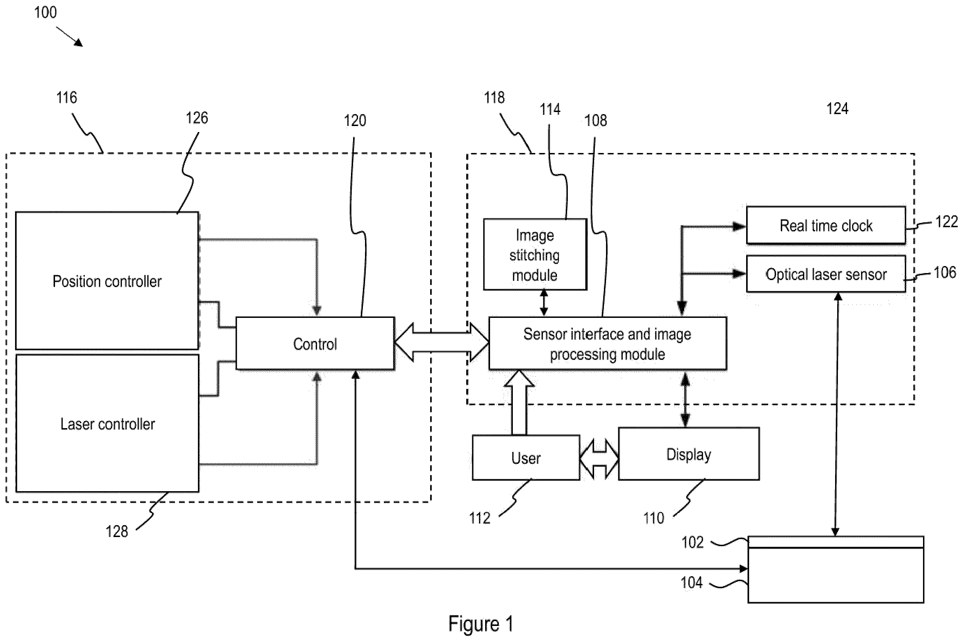

Referring to Figure 1, shown therein is a block diagram of a system 100 for determining or measuring contaminant, according to an embodiment. The system 100 determines if contaminant 102 is on a surface of an object 104. The system 100 may measure the amount of contaminant 102 on the object 104. The contaminant 102 refers collectively to the individual contaminant particles 102 or may be referred to as contaminant simulant particles 102.

The contaminant 102 may be particles including any one or more of dust, debris, lunar regolith, or other contaminants. The contaminant 102 may be any material that may damage the object 104 or other equipment. The measurements of the contaminant measurement system 100 beneficially facilitates disposing or protecting the object 104 against damage. The system 100 testing in the presence of contaminant 102 particles may be accomplished using analogue or simulant contaminant particles.

The object 104 may have a confined space. The confined space may be a space where typical camera imager and/or sensing equipment does not fit due to equipment size and focal length requirements. The confined space may be just large enough for an optical laser to get size information. The object 104 may be a rotary joint. The system 100 may estimate if contaminant 102 is coming through a seal of the rotary joint, while the rotary joint is in motion. The rotary joint may be on a robot. The robot may be a space robot. The robot may be a lunar robot operating in a lunar environment.

The to be measured contaminant 102 may be suspended in an environment around the object 104 (i.e. floating, drifting, or airborne). The environment may be in a vacuum such as space. The environment may be a typically fluidic atmosphere through which contaminant measurement system 100 is traveling.

The object 104 may be a moving or stationary target. For example, the object 104 may be moving with speeds that exceed 40 inches/second and accelerations of up to 50g.

The system 100 includes a laser sensor 106 for sensing the contaminant 102. The laser sensor 106 may be an optical laser sensor that optically measures the contaminant 102. The laser sensor 106 may include an infrared sensor that projects infrared laser light from a source of light (e.g., infrared emitter such as a light emitting diode (LED)) onto the object 104. The laser sensor 106 includes a read head (e.g., an area on the sensor 106 diode that is sensitive to light (e.g., in the nano meter wavelength)) that receives the infrared laser light reflected back from the object 104. The laser sensor 106 may not be influenced by light external to the object 104.

The laser sensor 106 may include a class 2 laser sensor configured for close proximity measurement of the amount of contaminant 102 in a focal point of the optical sensor 106. The laser sensor 106 may operate in the spectrum 940 - 950nm. Depending on the selection of the laser sensor 106, accurate measurements that exceed 16,000 - 25,000 DPI may be achieved on a 2.3 - 2.6 square millimeter target. The system 100 may provide up to 14,000 frames per second (FPS) without resorting to special direct memory access techniques.

The system 100 may provide a positive indication of contaminant 102. The system 100 may provide a qualitative assessment of the magnitude of the contaminant present. Where the substrate is fully covered with contaminants, the optical comparison may not be able to determine anything more than '100% area coverage'. The laser sensor 106 may have a response curve throughout the functional range of the laser sensor 106. The laser sensor 106 may have a "cut-off" range.

In an optional embodiment, the laser sensor 106 may determine if the object 104 is moving improperly (wobbling) by monitoring an image (e.g., dot) on the object 104.

The system 100 may be used to evaluate contaminant deposition. The system 100 may be used in any one or more of other applications including positional control of machine components in relative movement, vibration monitoring of the same type of components, real time lubrication failure in moving interfaces.

In particular, the system 100 may provide position control to ensure that a certain component comes in the desired position at the precise moment in time (e.g., reciprocating mechanisms, valve position control).

The system 100 may provide pattern recognition such as false coin identification by exploring the surface of the coin and comparing it with a reference reflection signature.

The system 100 may provide lubrication monitoring, for example, where fluid viscosity increases and certain components might experience reduced functional life (e.g., in bearings). The system 100 may issue an early warning that such phenomena might just begin to enact.

In using the laser sensor 106, the system 100 may avoid more costly and larger optical systems which measure contaminants based on digital imaging processing using optical cameras where the focal distance renders the camera unusable. The system 100 may be beneficially deployed in a confined space of the object. Further, conventional systems may be contaminated by the contaminant even with coatings because of the electrostatic characteristics.

The system 100 may provide real time robust measurements, fast response with high sample rates, and measurements at close proximity to the object 104.

The system 100 includes a sensor interface and image processing module 108 that receives an image of the infrared laser light that is accumulated on the surface of the object 104. The sensor interface and image processing module 108 processes the image.

The system 100 uses a combination of image characterization (statistical measurement of luminosity distribution over optical target) and image processing techniques correlated to provide for high accuracy in measurement.

The system includes a display 110 for providing visual display to a user 112.

The system 100 may include an image stitching module 114 that provides a software function with a frozen visual representation of the object 104. The image stitching module 114 may assemble the individual frames into a complete picture to provide a more detailed image analysis investigation.

In an embodiment, the laser sensor 106 takes thousands of small (e.g., 2x2mm) images (frames). The entire surface of interest (the one that collects the contaminant) is usually much larger. Those frames are acquired as the sensor 106 moves above the surface of interest but not necessary in an order. In order to get a true image based on all the frames the system 100 saves the frames temporarily in memory and, once finished, retrieves them in a sequence that permits assembling all of them in a square picture during the stitching process. A user may be able to then look at the final image and assess the parameters.

The system 100 includes a test control module 116 that includes the mechanical aspects of the system 100. The system 100 includes a laser imaging system 118 that includes the electrical aspects of the system 100. The functionality of the test control module 116 is linked with the laser imaging system 118.

The test control module 116 includes a controller 120 for controlling mechanical rotational actuation of the object 104. The test control module 116 includes controls providing accurate programmatic execution of testing schedule. The test control module 116 controls the sensorial equipment (e.g., the laser sensor 106) for positional synchronization. The test control module 116 positions the laser sensor 106 in a radial fashion at a desired aperture.

In variant embodiments, the system being tested may be any one or more of gearboxes, bearing surfaces, fuel tanks, structural monitoring (e.g., cracks/crack propagation), mining pump internals (e.g., rotor shaft eccentricity), mechanical interfaces, and faying surfaces.

The laser sensor 106 includes an exposure subsystem. The laser sensor 106 works with the exposure subsystem synchronously and at very fast rate. The exposure subsystem performs two exposures for each frame. For example, at 12,000 FPS (Frames Per Second) ambiental and infrared (IR) parasitic rejection is achieved. The first exposure is performed without activating the internal IR exposure sub-system. The second exposure is performed with activation of the internal IR exposure sub-system. Subsequently, the system 100 subtracts from the second exposure the first one therefore eliminating parasitic ambiental "noise".

The laser imaging system 118 acquires and interprets data coming from the laser sensor 106. The laser imaging system 118 includes the hardware and the software part that controls the succession of actions that provide the resulting data. The sensor interface and image processing module 108 provides a user interface to receive commands. Commands may be entered through a standard serial interface (e.g., RS232C) or programmatically as content of an execution file stored on a memory (e.g., secure digital flash memory).

The system 100 includes a position controller 126 for controlling the position of the object 104. The position controller 126 includes a driver for controlling the controller 120 that may move the object 104 (e.g., a stepper motor that rotates the object 104).

The system 100 includes a laser controller 128 for controlling the optical laser sensor 106. The laser controller 128 includes a driver for controlling the controller to move the optical sensor 106.

The position controller 126 and the laser controller 128 may actuate and move the system 200 to explore the monitored surface of the object 104. The position controller 126 may be actuated in accordance with a test schedule. The test schedule provides movement so that the system 200 performs as close as possible to real functionality. The laser controller 128 may be actuated by firmware that is synchronized in real time with the frames of the laser sensor 106.

The system 100 includes a real time clock 122. The real time clock 122 implements a "time base" for the sequence of repeated frames acquisition. The real time clock 122 is used for logging data by correlating measurements and program execution with the time these are performed so that the system can observe eventual events with the time they occurred.

The exposure subsystem may allow interface with a secure digital (SD) card (e.g., a small hard drive). The exposure subsystem may allow the system 100 to read and interpret the user program. The exposure subsystem may allow the system 100 to log the results and the time certain instructions were executed.

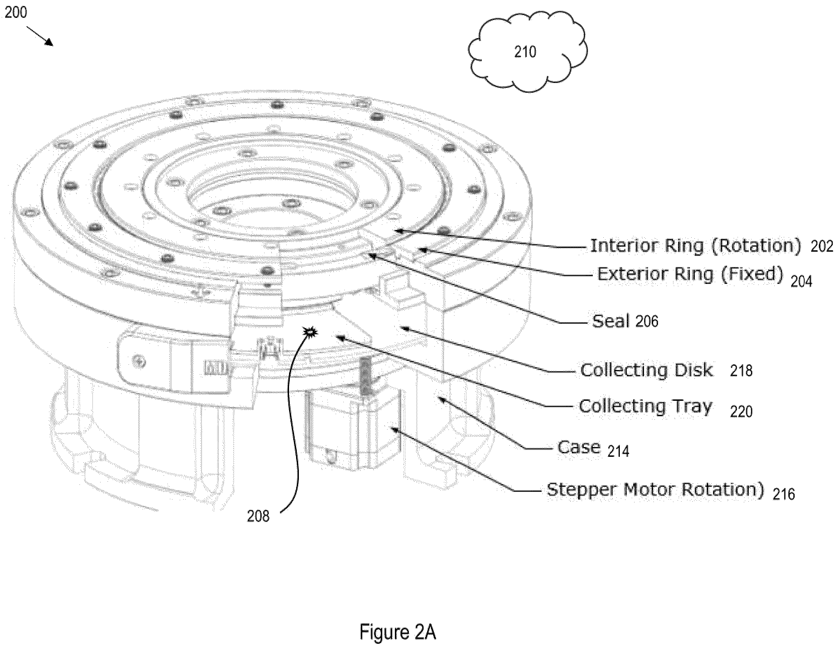

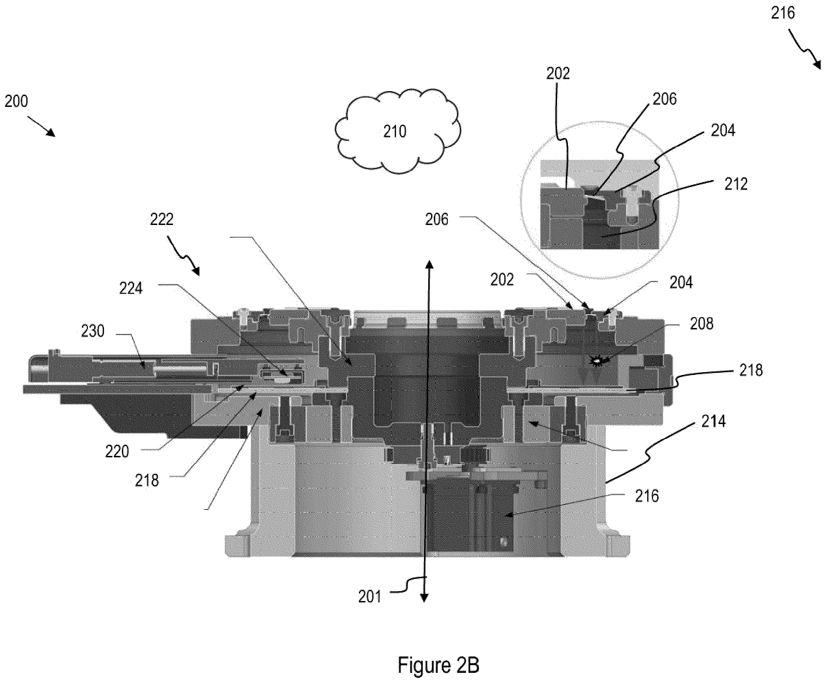

Referring to Figures 2A-2D, there is a system 200 for contaminant measurement, in accordance with an embodiment. The system 200 is an example system of the system 100 of Figure 1, that tests for contamination in a rotary context, such as a rotary joint.

The system 200 includes an interior ring 202 that rotates about axis 201 with respect to an exterior ring 204, which is fixed. The system 200 includes a seal 206 that is positioned between the interior ring 202 and the exterior ring 204. The seal 206 separates an external environment 210 from an internal cavity 212 of the system 200. The system 200 determines the amount of contaminant 208 (shown enlarged for illustration) that passes through the seal 206 from the external environment 210 and into the internal cavity 212 of the system 200.

The system 200 includes a case 214 that houses a stepper motor 216. The system 200 includes a collecting disk 218 that collects the contaminant 208 onto a collecting tray 220. The collecting tray 220 is conveyed by the stepper motor 216 about axis 201. The collecting tray 220 conveys the contaminant 208 to a scanning position 222.

The system 200 includes a laser sensor 224 (e.g., optical laser sensor 106 of Figure 1) at the scanning position 222 to scan the collecting tray 220 for contaminant 208. The laser sensor 224 is sequentially positioned at successive tracks in order to perform a complete scan of the collecting tray 220.

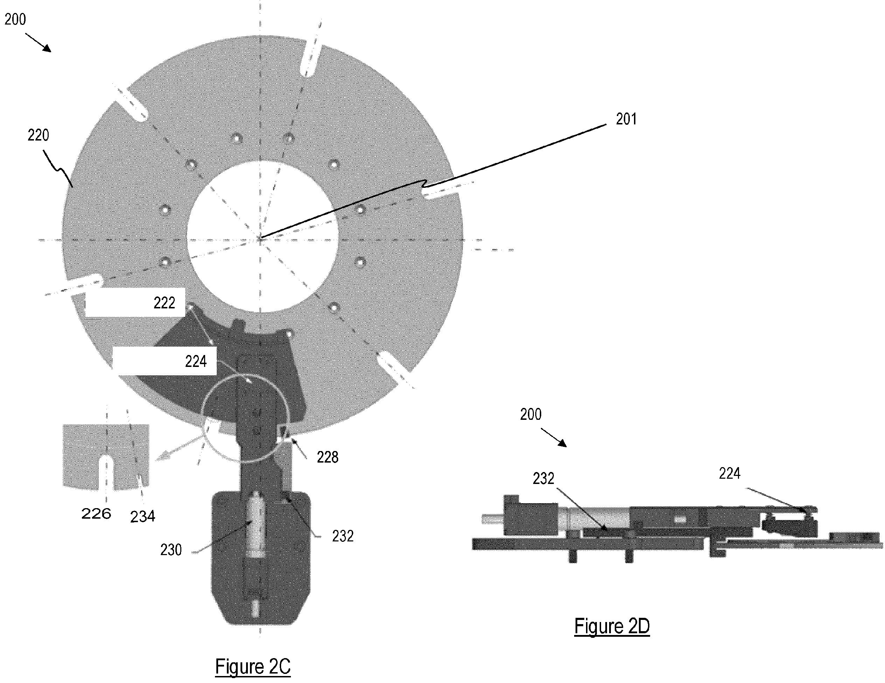

As shown in Figure 2C, the system 200 may include a home reference slot 226 that positions the collecting tray 220 at a rotational home reference 228.

As shown in Figure 2C and 2D, the system 200 includes a translation actuation system 230 that translates the laser sensor 224 with respect to the collecting tray 220. The system 200 includes a translation slide 232 for sliding the laser sensor 224. The system 200 has a translation home reference that positions the laser sensor 224 at a translation home.

The laser sensor 224 may be a high speed, low resolution imaging or a proximity sensing device. The laser sensor 224 may be of various resolution types ranging from 9k pixels to over 32k pixels. The laser sensor 224 may have high frame rates of 12K to 17K FPS. The laser sensor 224 may have the ability to track speeds up to 60inch/sec, while withstanding accelerations in excess of 50G.

The collecting tray 220 may be placed at about 2.4mm away from the laser sensor 224. The distance from the laser sensor 224 is taken into account when judging the resolution of the image. The laser sensor 224 may have, for example, a physical size in the range of 1.8 - 2.2 sq. mm. The laser sensor 224 may perform in the range of 4700 - 5200 DPI. The laser sensor 224 may operate at wavelengths of 940 - 950 nm.

The laser sensor 224 may be targeted towards determination of lunar dust (regolith) ingress through the dynamic sealed boundary of the system 200.

The system 200 performs an optical laser scan. The optical laser scan may be a special operating-cycle that performs a complete rotation of the joint indexing sequential image sampling positions along track radius. The scan will result in a collection of sequential congruent images sampled across a circular sector placed underneath the joint rotating boundary. After completing the scan, the system 200 infers a measurement that qualifies the degree of change in contaminant (e.g., regolith/simulant) accumulation since last scan was performed. Performing a scan cycle acquires a new data point in the timeline of the test schedule.

Several different scan cycles are defined and used for specific scope in the test schedule. There may not be a correlation between the scan response information and any quantification in terms of amount of contaminant accumulation. The limitation results both from the mathematical formulation of the detection procedure as well as the lack of calibration data that could be used to find appropriate dependency between the estimator and mass or volumetric accumulation of contaminant. Further deviation could result from IR response of the laser sensor 224 although such errors may be small in comparison with the first two of them.

This limitation is due to the color variability of the contaminant particles. A small particle of darker color might have the same IR signature as a larger particle that is lighter.

The system 200 may be used as a detector and a method to estimate the degree of change from the initial condition rather than a true measurement system. Proper correlation in terms of mass may be achieved by extracting the collecting trays and scaling the amount of accumulated material. However, a large number of particles retained on the collecting surface may alleviate this situation as variation of the reflection response rapidly diminishes when the number of particles becomes large and the mean of the sample approaches the mean of the population.

The scan returns a record set that each update a scan data file. The scan data file is a collection of data resulting from past performed scan operations.

The system 200 may include a calibration phase. During the calibration phase the system 200 detects several functional parameters that are geometrically and functionally dependent on the amount of contaminant deposition. The system 200 will start a set of rotations with a fixed RPM and count the impulses of a gated crystal clock output to precisely determine the physical dimensions of the slots 226. The system 200 determines the position of a narrow slot 234 that acts as the "zero" index reference. The system 200 determines the value of the compensate factor to control motor rotation to the actually required user RPM. At the same time some functional parameters are adjusted as a function of the exact angular offset from the slot 226 where frame sampling occurs during the scanning operation.

Scanning the substrate on the collecting tray 220 is the principal method of evaluating the degree of contaminant accumulation past the joint barrier protection. Extracting the collection tray 220 for visual inspection may be an alternative option due to the risk that during the maneuvering process the layer of contaminant may change pattern therefore invalidating the baseline scan data. Scanning is an operation that depends on the geometric dimensions of the system 200 as well as on the kinematic movement. A scan operation may be performed if the calibration phase data has been altered. The calibration operation may be initialized as so often as required to ensure that the system 200 is aware of any changes that might have occurred since the last calibration.

The system 200 performs the same calculations that would otherwise be performed for the scanning operation i.e. determining the perimeter of every detected grain of contaminant that penetrated the sealing boundary of the joint and summing the result.

Results may be assessed by using the scan command program instruction. Results may be assessed by visual inspection of each of the trays accumulation surface.

Assessing the amount of contaminant that penetrated the joint sealing boundary is done optically where the laser sensor 224 takes sample frame snapshots at predefined locations on the collecting trays substrate defined by the angular position referenced by the corresponding slot and a radial track position. The scanning procedure begins at outermost radius and follows sequentially up to the last track. The number of tracks are customizable and are stored in a file. Each track has assigned a number of "frames" per tray (FPT) and this number is also defined inside the file.

Each of the frames undergoes an image processing procedure where eventually trapped simulant grains are identified and their perimeter is estimated. Actuation is briefly stopped allowing for image processing and persistent serialization on the SD card. A spectral analysis will translate that information into a number that is proportional to the length of the perimeter around the grain. That value is cumulated with similar values from all other frames and may be reported as a strip graph. Performing a scan operation may provide a new data point in the timeline of the testing process.

Scan results can also be visually analyzed. This utility is essentially a file converter that takes as input the scan data file and outputs a bitmap representation of that scan. A visual representation of this acquired image is presented in 401. The image 401 is the raw image. The processing performed includes rejecting the ambient parasitic IR as described above.

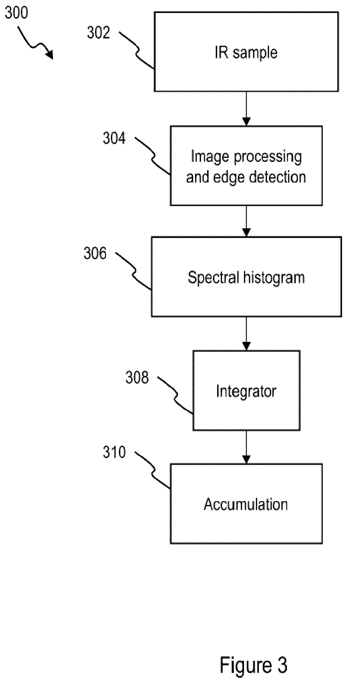

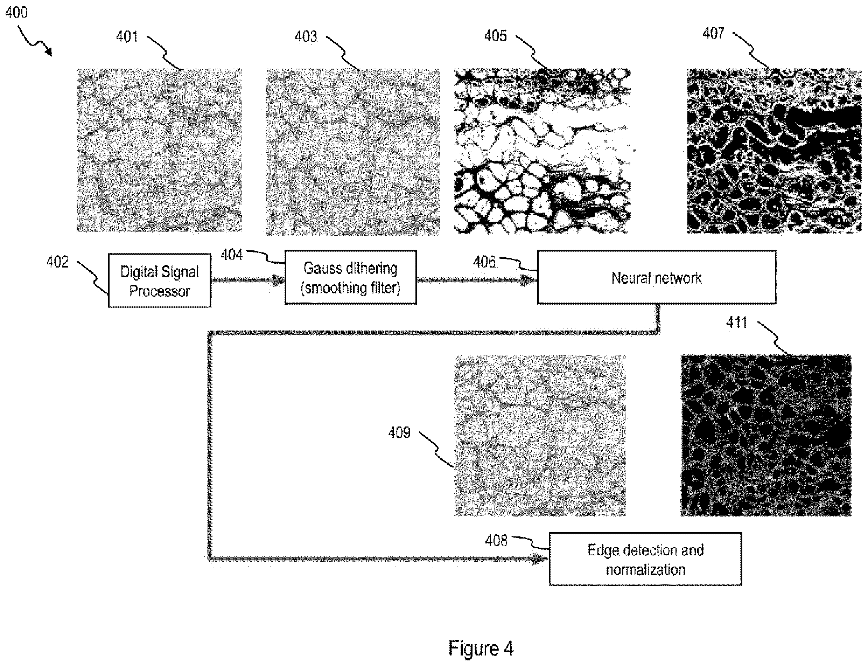

Figure 3 illustrates a method 300 of image processing, in accordance with an embodiment. The method 300 includes receiving the IR sample at 302. Figure 4 illustrates a method 400 of image processing, in accordance with an embodiment.

At 304, the IR sample undergoes image processing (402) and edge detection. The presence of contaminant particles retained on the surface of each of the tray's substrate is identified and quantified using digital image processing techniques in a sequential succession.

304 includes dithering (404) the image. Dithering 404 is followed by neural network processing (406). The neural network processing (406) may include two sequential differential operations. The first one is preparing the subsequent edge detection (another differential operator) by morphing the dark and light dots in a connected network. The dithering 404 operates to avoid the possibility of very large values that can result from the differential operator application. The differential operator application includes a method to confine large numbers that could falsely result from transitions from bright to dark pixels.

In an embodiment, neural networks are defined as numbers of neurons and number of layers. Every neural network is in essence an approximator where the neural network tries to find a mathematical representation of the data at input and is doing that based on learning from examples that the user provides and that are deemed to be correct. A process called learning using labeled data and the neural network is called a convolutional neural network. The number of neurons influence the accuracy of approximation and the number of layers determine the ability to approximate non-linear dependency.

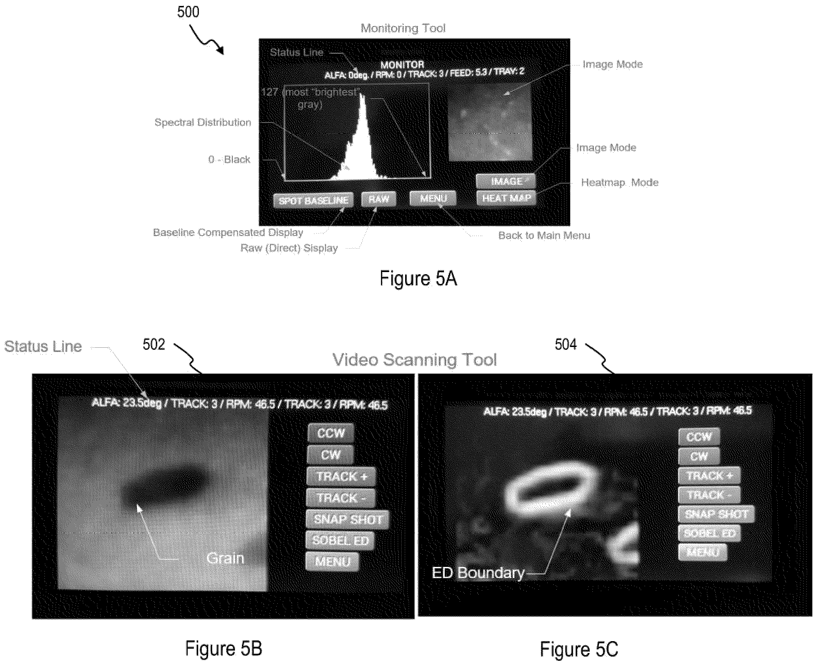

Subsequently, the method includes edge detection 408 and is followed by a normalization. The edge detection may be performed by a Sobel-Freidman operator. Differential operators may induce large variation in the values for transitions from bright to dark pixels, none of which may contain valuable information, as these result simply from the differentiation constants. The normalization groups all dark and all bright pixels in clusters allowing therefore for clear boundary identification as described with reference to Figure 5.

At 304, in an embodiment, the method 300 includes convoluting two orthogonal Sobel operators with every scanned frame and evaluating afterwards the size of the identified grain particle within the perimeter of the scan:

$$\mathbf{G}_x = \begin{bmatrix} +1 & 0 & -1 \\ +2 & 0 & -2 \\ +1 & 0 & -1 \end{bmatrix} * \mathbf{A} \quad \text{and} \quad \mathbf{G}_y = \begin{bmatrix} +1 & +2 & +1 \\ 0 & 0 & 0 \\ -1 & -2 & -1 \end{bmatrix} * \mathbf{A}$$

At every image pixel the two resulting gradient approximations are combined to result in the magnitude and the direction of the gradient.

$$\mathbf{G} = \sqrt{\mathbf{G}_x{}^2 + \mathbf{G}_y{}^2} \quad \Theta = \operatorname{atan}\left(\frac{\mathbf{G}_y}{\mathbf{G}_x}\right)$$

At 306, a spectral histogram is performed.

At 308, an integrator is performed.

At 310, accumulation is performed.

Figure 4 illustrates a method 400 of image processing, in accordance with an embodiment. The image processing method 400 may be a Sobel edge detection sequence.

Since Sobel operators are differential in this embodiment, the image is initially dithered to prevent unbounded results in differential terms. A spectral analysis follower by an integrator block is translating the information of simulant grey signature of the perimeter into an optical estimate of accumulation.

Software control is achieved using a digital signal processor benefiting from a dedicated library that insulates the user from having to deal with low level access to the sensor using a dedicated HAL (Hardware Abstraction Layer). The library can be ported with little or no changes to many other applications of interest. The digital signal processor (DSP) may be using hardware multiplication barrel relieving the system from delays that may affect capability to acquire high rate frames.

A raw image 401 is supplied by an optical laser sensor (e.g., optical laser sensor 106). A digital signal processor 402 performs the core edge detection procedure by applying the Sobel differential operator to the raw image 401 as described with reference to 304.

If the analysis is simply performed directly on the acquired raw image 401 the result would be an image that has a maximum contrast between the dark and light pixels because of the differential nature of operator. While that might be beneficial in certain applications, it may not be optimal for edge detection because certain softer edges would be missed.

The method 400 trades some of the contrast for softer identification of differences. A Gauss dithering smoothing filter 404 dithers the image to produce a dithered image 403. The dithered image 403 is directly fed to the segmentation procedure to create a result 405 where individual parts of the periphery envelope of contaminant grain are segmented into separate parts. For example, the signature that should identify the all-around periphery of the grain might be identified as the periphery of two separate grains of a smaller size. However, this might be appropriate for many other cases.

A morphological gradient estimator 406 generates an image 407 having morphological definition of the peripheric edges of contaminant grain, which is identified before differentiation. The morphological gradient estimator 406 may include a convolutional neural network trained to connect disparate contour lines into what would be the most probable signature of a larger contaminant grain periphery signature 405 and 407.

A Sobel-Friedman edge detection and normalization engine applies the Sobel operator to generate individual signatures that can be easily segregated as shown at image 409. Image 411 is a visual representation (full scale black and white of the final result).

Figures 5A, 5B, and 5C illustrate user interfaces 500, 502, 504 of a contaminant measurement system, in accordance with an embodiment.

The interface 502 illustrates the result of applying the method of Figures 4 and 5 in case of a contaminant particle approx. 0.1mm in cross diagonal size. Interfaces 502 and 504 are explanatory on how the raw image transitioned into something that evaluates the contaminant particle perimeter/area.

The system may provide information in terms of visual percentage of change from a clean status and a pattern of deposition. Various techniques can be further used to translate this information in a quantifiable estimation of contaminant accumulation.

The system may include a monitoring tool. The monitoring tool is a screen driven utility that allows the user to qualify the substrate of the material that comes into contact with the contaminant - the collecting tray's substrate. The material has a constant reflecting response when exposed to the 940nm IR Laser beam throughout the entire surface. The reflection response may be at a notable offset from the one of the contaminant grains and have a normal distribution around the mean value.

Figure 5A illustrates a display 500 of a control unit for the system. A contaminant particle is identified as returning a different reflection of the laser beam as compared with the one returned by the surface of the tray (so called reference surface or substrate surface). As a result, a large difference between these two response signatures may provide a good signal-to-noise ratio. The control unit includes a tool to facilitate placing a small amount of particles on a certain substrate and bringing the laser head into position to generate a spectral view of the response. The substrate response may be adjusted to be as far as possible from the one returned by the contaminant and one that has significantly lower amplitude than the one returned by contaminant. The tool serves as an aid in determining the best substrate surface for a given type of contaminant.

In some cases, a user may place a clean piece of an exploratory material underneath the sensor to analyze the amplitude response with and without contaminant.

In Figure 5A, the screen 500 displays an example image of a 2x2mm wide instantaneous frame laying directly underneath the sensor. The screen 504 displays a spectral histogram of the gray repose of the same image. The histogram spreads from 0 (black) to 127 - the maximum amount of "bright gray" that the sensor is capable of measuring.

The system described herein may monitor eventual changes in the level of accumulation visualizing the results as a heat map rather than as an image (e.g., where the magnitude of change seems to be of interest).

In order to precisely evaluate the optical reflection originating exclusively from the contaminant grains the user can place a clean piece of substrate sheet under the sensor and perform a spot baseline test. The spot baseline test may be extracted from the measurements therefore eliminating the contribution of the substrate. The visual scanning tool may include a screen driven application that indicates to the user the effectiveness of the edge detection procedure.

In Figure 5B, the screen 502 displays the image corresponding to actual location of the sensor. The system may perform the entire measurement procedure identifying and marking the boundary of the identified particles. The screen 502 illustrates, drifted towards higher white spectrum, the boundary color remains proportional with the amplitude of the reflecting response.

While the above description provides examples of one or more apparatus, methods, or systems, it will be appreciated that other apparatus, methods, or systems may be within the scope of the claims as interpreted by one of skill in the art.

**Claims**

1. A system for contaminant determination, the system comprising:

   a laser sensor for sensing contaminant on an object to generate an image; and
   a sensor interface and image processing module that receives an image of laser light that is sensed on the object;
   wherein the sensor interface and image processing module processes the image using image characterization and image processing to provide contaminant determination.

2. The system of claim 1 wherein the laser sensor is configured for close proximity measurement of the amount of contaminant in a focal point of the optical sensor.

3. The system of claim 1 wherein the system is used to estimate a degree of change in contaminant level from an initial condition.

4. The system of claim 1 further comprising an exposure subsystem that performs two exposures for each frame to achieve ambiental and infrared (IR) parasitic rejection.

5. The system of claim 1 further comprising an image stitching module that stitches individual frames into a complete picture to provide a detailed image analysis investigation.

6. The system of claim 1 wherein the object includes a rotary joint having a confined space where presence of contaminant is determined.

7. The system of claim 1 further comprising:

   a rotation actuation controller for controlling the rotation of the object; and
   a laser actuation controller for controlling actuation of the laser sensor.

8. The system of claim 1 wherein the contaminant includes any one or more of dust, debris, and lunar regolith.

9. The system of claim 1 wherein the laser sensor determines if the object is moving improperly by monitoring contaminant on a surface of an object through collected images.

10. A method for contaminant determination, the method includes:

    receiving an image having scanned frames, wherein the scanned frames have a plurality of image pixels;
    convoluting operators with the scanned frames;
    evaluating the size of the identified grain particle within the perimeter of the scan; and
    combining, at the plurality image pixels, a gradient approximation resulting in a magnitude and a direction of the gradient.

11. The method of claim 10 further comprising any one or more of performing a spectral histogram, performing an integrator, performing an accumulation, and dithering the image.

12. The method of claim 10 further comprising preparing a subsequent edge detection by morphing the dark and light dots in a connected network.

**13.** The method of claim 10 further comprising a differential operator application that confines the image pixels that could falsely result from transitions of light to black.

**14.** The method of claim 10 further comprising performing actual edge detection with a Sobel-Friedman operator.

**15.** The method of claim 14 further comprising normalization of groups of dark and white image pixels to provide boundary identification.

Figure 1

200

210

Interior Ring (Rotation) 202
Exterior Ring (Fixed) 204
Seal 206
Collecting Disk 218
Collecting Tray 220
Case 214
Stepper Motor Rotation) 216

208

Figure 2A

Figure 2B

Figure 2C

Figure 2D

EP 4 700 374 A2

300

302 — IR sample

304 — Image processing and edge detection

306 — Spectral histogram

308 — Integrator

310 — Accumulation

Figure 3

400

401    403    405    407

| 402 | Digital Signal Processor | 404 | Gauss dithering (smoothing filter) | 406 | Neural network |

411

409

| 408 | Edge detection and normalization |

Figure 4

EP 4 700 374 A2

Figure 5A

Figure 5B

Figure 5C